# EUROPÄISCHE PATENTANMELDUNG

(11) **EP 0 896 409 A2**
(43) Veröffentlichungstag der Anmeldung: **10.02.1999**
(21) Anmeldenummer: 98401776.4
(22) Anmeldetag: 13.07.1998
(51) Int. Cl.: H02G 15/184, H01R 13/53

(54) **Abzweigmuffe für Energiekabel**

(30) Priorität: 05.08.1997 DE 19733853
(71) Anmelder: ALCATEL, 75008 Paris (FR)
(72) Erfinder: Baesch, Manfred, 46049 Oberhausen (DE)
(74) Vertreter: Mende, Dirk

(57) **Zusammenfassung**

Eine Abzweigmuffe (1) für Energiekabel, insbesondere für einadrige kunststoffisolierte Mittel- oder Hochspannungskabel, hat ein Abzweigteil (3), das eine elektrische Verbindung zwischen einem elektrischen Leiter (9) eines Hauptkabels (11) und einem elektrischen Leiter (13) eines Abzweigkabels (15) herstellt, sowie einen Muffenkörper (25). Der elektrische Leiter (13) des Abzweigkabels (15) ist mit einem Steckverbinder (17) versehen und mittels einer Steckverbindung mit dem Abzweigteil (3) verbunden. Auf diese Weise wird eine einfache und kostengünstige Herstellung eines Abzweiges für kunststoffisolierte Mittel- oder Hochspannungskabel ermöglicht (Fig.).

## Beschreibung

Die Erfindung betrifft eine Abzweigmuffe für Energiekabel nach dem Oberbegriff des Patentanspruchs 1.

Für Energiekabel sind verschiedene Abzweigmuffen bekannt, die mittels eines Abzweigteils eine elektrische Verbindung zwischen einem elektrischen Leiter eines Hauptkabels und einem elektrischen Leiter eines Abzweigkabels herstellen. Solche Abzweigmuffen werden in der Regel aber nur in Niederspannungsnetzen montiert. Abzweige von kunststoffisolierten Mittel- oder Hochspannungskabeln werden dagegen in sogenannten Schaltanlagen vorgenommen. Dazu ist es erforderlich, das Hauptkabel von der Kabeltrasse zur Schaltanlage zu führen, dort den Abzweig beispielsweise zu einem Transformator oder einem anderen elektrischen Gerät herzustellen und von der Schaltanlage aus das Hauptkabel zur Kabeltrasse zurückzuführen.

Der Erfindung liegt daher das Problem zugrunde, eine Abzweigmuffe für Energiekabel zu schaffen, die sich auch für kunststoffisolierte Mittel- oder Hochspannungskabel eignet und die einfache und kostengünstige Herstellung eines Abzweiges ermöglicht.

Dieses Problem wird gemäß der Erfindung dadurch gelöst, daß der elektrische Leiter des Abzweigkabels mit einem Steckverbinder versehen und mittels einer Steckverbindung mit dem Abzweigteil verbunden ist.

Die durch die Erfindung erzielbaren Vorteile bestehen insbesondere darin, daß sich mit Hilfe der Abzweigmuffe auch bei kunststoffisolierten Mittel- oder Hochspannungskabeln auf einfache und kostengünstige Art und Weise ein Abzweig von einem elektrischen Leiter eines Hauptkabels zu einem elektrischen Leiter eines Abzweigkabels herstellen läßt. Durch die Verwendung einer Steckverbindung für den elektrischen Anschluß des Abzweigkabels an das Abzweigteil ist die Abzweigmuffe zudem schnell und einfach montierbar. Dies gilt in besonderem Maße, wenn ein vorgefertigter Muffenkörper verwendet wird. Die erfindungsgemäße Abzweigmuffe ermöglicht es beispielsweise, ein Abzweigkabel von der in der Kabeltrasse eines Hauptkabels angeordneten Abzweigmuffe aus unmittelbar zu einem Transformator oder einem anderen elektrischen Gerät zu führen, ohne daß eine zusätzliche Schaltanlage oder eine andere zusätzliche Vorrichtung zur Herstellung des Abzweiges notwendig sind. Zudem wird eine geringere Kabellänge zur Herstellung des Abzweiges benötigt. Auf diese Weise werden die bei der Installation eines Mittelspannungs- oder Hochspannungsnetzes anfallenden Kosten deutlich reduziert.

Durch die in den Unteransprüchen aufgeführten Merkmale sind vorteilhafte Weiterbildungen und Verbesserungen der Erfindung möglich.

Von Vorteil ist es, wenn das Hauptkabel durchtrennt, die beiden Enden seines elektrischen Leiters jeweils mit einem Steckverbinder versehen und mittels einer Steckverbindung mit dem Abzweigteil verbunden sind, so daß die Abzweigmuffe besonders einfach, schnell und kostengünstig montiert werden kann.

Für eine besonders platzsparende Ausbildung der Abzweigmuffe und einen möglichst geringen Umfang an erforderlichen Erdarbeiten ist es von Vorteil, wenn das Abzweigkabel parallel zu dem Hauptkabel aus dem Muffenkörper herausgeführt ist. Eine solche Form der Abzweigmuffe wird auch als Hosenform oder Parallelform bezeichnet.

Um zu verhindern, daß die Steckverbinder des Abzweigkabels und des Hauptkabels sich gegenüber dem Abzweigteil verschieben und im Extremfall aus dem Abzweigteil herausrutschen können und kein ausreichender elektrischer Kontakt zwischen den beiden Enden des Hauptkabels und dem Abzweigkabel sichergestellt ist, ist es von Vorteil, wenn die Steckverbinder in dem Abzweigteil in ihrer Lage fixiert sind.

Für eine einfache und schnelle Montage des Muffenkörpers über dem Abzweigteil sowie ein dichtes und spaltfreies Anliegen des Muffenkörpers an den umschlossenen Flächen ist es von Vorteil, wenn der Muffenkörper als vorgefertigtes Aufschiebeteil aus einem elastischen Werkstoff ausgebildet ist.

Aus den gleichen Gründen ist es ebenfalls von Vorteil, wenn der Muffenkörper als Kaltschrumpfteil ausgebildet ist. Ein als Kaltschrumpfteil ausgebildeter Muffenkörper läßt sich für einen weiten Bereich verschieden großer Kabelquerschnitte verwenden. Zudem ermöglicht ein Kaltschrumpfteil einen besonders dichten Abschluß der Abzweigmuffe nach außen mit einer spaltfreien Umschließung der Enden des Abzweigkabels und des Hauptkabels.

Um eine zu starke Konzentration der Feldstärke im Bereich der Enden des Hauptkabels und des Abzweigkabels sowie im Bereich des Abzweigteils zu vermeiden, ist es von Vorteil, wenn in dem Muffenkörper elektrisch leitfähige Feldsteuerelemente angeordnet sind. Dabei ist es besonders vorteilhaft, wenn das Abzweigteil von einem solchen elektrisch leitfähigen Feldsteuerelement umschlossen ist. Für einen einfachen Aufbau der Abzweigmuffe ist es von Vorteil, wenn die elektrisch leitfähigen Feldsteuerelemente in dem Muffenkörper integriert sind.

Um einen feuchtigkeitsdichten Abschluß der Abzweigmuffe zu gewährleisten, ist es vorteilhaft, wenn über dem Muffenkörper ein die Enden des Hauptkabels und des Abzweigkabels umschließender Schrumpfschlauch angeordnet ist.

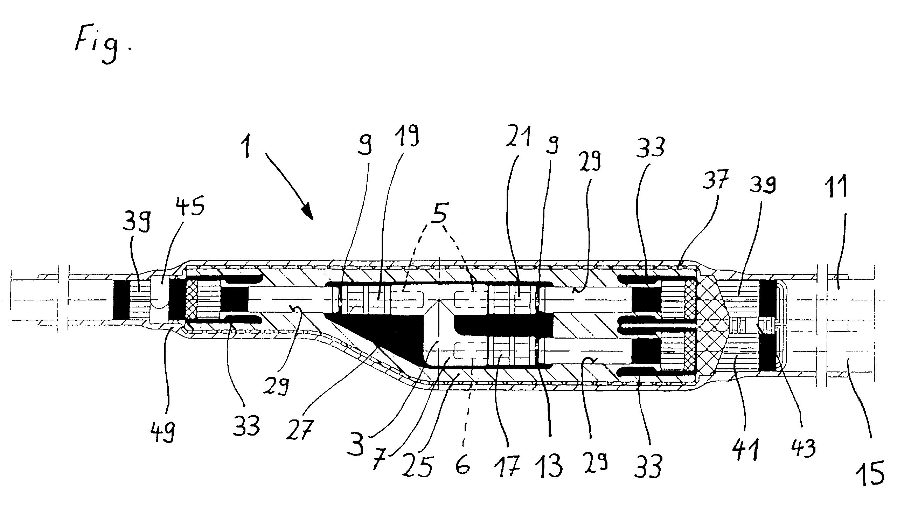

Ein Ausführungsbeispiel der Erfindung ist in der Zeichnung vereinfacht dargestellt und in der nachfolgenden Beschreibung näher erläutert.

Die in der Figur beispielhaft dargestellte Abzweigmuffe 1 weist ein etwa T-förmiges Abzweigteil 3 auf, das beispielsweise mit drei als Steckbuchse ausgebildeten Steckvorrichtungen 5 und 6 versehen ist. Die beiden Steckvorrichtungen 5 liegen bei diesem Ausführungsbeispiel in einer Linie längs der Abzweigmuffe 1. Die dritte Steckvorrichtung 6 ist parallel und dabei versetzt zu den beiden Steckvorrichtungen 5 in einem abgewinkelten Bereich 7 des Abzweigteils 3 ausgebildet. Die hier dargestellte Abzweigmuffe 1, die sich insbesondere für einadnge kunststoffisolierte Mittel- oder Hochspannungskabel eignet, dient zur Herstellung einer elektrischen Verbindung zwischen einem elektrischen Leiter 9 eines Hauptkabels 11 und einem elektrischen Leiter 13 eines Abzweigkabels 15. Das Ende des elektrischen Leiters 13 des Abzweigkabels 15 ist beispielsweise mittels einer in der Figur dargestellten unlösbaren Verpressung oder mittels einer Verschraubung mit einem elektrischen Steckverbinder 17 versehen, der z. B. in die im abgewinkelten Bereich 7 des Abzweigteils 3 vorgesehene Steckvorrichtung 6 gesteckt und mittels einer in dem Abzweigteil 3 angeordneten Rastverbindung in seiner Lage gegenüber dem Abzweigteil festgelegt ist. Der elektrische Kontakt zwischen Steckverbinder 17 und Abzweigteil 3 wird z. B. mittels in der Steckvorrichtung 6 angeordneter bekannter Kontaktelemente sichergestellt.

Das Hauptkabel 11 ist bei dem dargestellten Ausführungsbeispiel durchtrennt. Z. B. ebenfalls mittels einer in der Figur dargestellten unlösbaren Verpressung oder mittels einer Verschraubung ist an jedem der beiden Enden des Hauptkabels 11 ein Steckverbinder 19 bzw. 21 montiert. Die beiden Steckverbinder 19 und 21 sind beispielsweise in die in einer Linie liegenden Steckvorrichtungen 5 des Abzweigteils 3 gesteckt und werden in ihrer Lage beispielsweise mittels einer in dem Abzweigteil vorgesehenen Rastverbindung fixiert. Die Fixierung der Steckverbinder 17, 19 und 21 gewährleistet einen sicheren elektrischen Kontakt zu dem Abzweigteil 3 und über dieses zwischen Hauptkabel 11 und Abzweigkabel 15. In den Steckvorrichtungen 5 sind z. B. ebenfalls bekannte Kontaktelemente angeordnet, die einen sicheren elektrischen Kontakt zwischen den beiden Steckverbindern 19 und 21 und dem Abzweigteil 3 gewährleisten.

Das Abzweigteil 3 ist von einem Muffenkörper 25 umschlossen, der sich über das Abzweigteil 3 und die bis auf die Isolierung abgesetzten Abschnitte der Enden des Hauptkabels 11 und des Abzweigkabels 15 hinweg erstreckt. Der Muffenkörper 25 ist z. B. als vorgefertigtes Aufschiebeteil aus einem elastischen Werkstoff wie Silikon ausgebildet, so daß der Muffenkörper durch seine hohe Elastizität Durchmessertoleranzen und durch Lastwechsel bedingte Durchmesseränderungen von Hauptkabel 11 und Abzweigkabel 15 problemlos aufnehmen kann. Es ist aber ebenfalls möglich, den Muffenkörper 25 als Kaltschrumpfteil auszubilden. Zur Feldsteuerung im Bereich des Abzweigteils 3 ist in dem Muffenkörper 25 des Ausfükrungsbeispiels ein das Abzweigteil 3 umschließendes, elektrisch leitfähiges Feldsteuerelement 27 integriert. Der Muffenkörper 25 weist zudem drei Kabeldurchführungen 29 zum Hindurchführen der beiden Enden des Hauptkabels 11 und des Endes des Abzweigkabels 15 auf. Um auch den Abbau von zu starken Feldstärkekonzentrationen im Bereich dieser Kabelenden zu ermöglichen, sind im Bereich der Kabeldurchführungen 29 mit dem jeweiligen Schirm des Hauptkabels 11 bzw. Abzweigkabels 15 in Verbindung stehende, elektrisch leitfähige Feldsteuerelemente 33 vorgesehen. Die Feldsteuerelemente 27 und 33 sind ebenfalls elastisch und in dem Muffenkörper 25 fest eingegossen.

Ein Geflechtschlauch 37, der z. B. aus Kupfer ausgebildet ist, verbindet den elektrischen Schirm 39 der beiden Enden des Hauptkabels 11 miteinander sowie mit dem elektrischen Schirm 41 des Abzweigkabels 15. An dem Ende der Abzweigmuffe 1, an dem das eine Ende des Hauptkabels 11 und das Ende des Abzweigkabels 15 parallel zueinander aus dem Muffenkörper 25 herausgeführt werden, ist der Geflechtschlauch 37 z. B. mittels eines Preßverbinders 43 mit den Schirmdrähten des Schirms 39 des Hauptkabels 11 und den Schirmdrähten des Schirms 41 des Abzweigkabels 15 verbunden. Es ist aber ebenfalls möglich, anstelle des Preßverbinders 43 einen Schraubverbinder zu verwenden. Auf der anderen Seite der Abzweigmuffe 1 ist das einzelne Ende des Hauptkabels 11 z. B. mittels einer Kontaktrollfeder 45 mit dem Geflechtschlauch 37 verbunden.

Über dem Geflechtschlauch 37 ist ein Schrumpfschlauch 49 auf die Abzweigmuffe 1 z. B. durch Warmschrumpfen aufgeschrumpft und überdeckt den Geflechtschlauch 37 sowie die Enden des Hauptkabels 11 und des Abzweigkabels 15. Durch das Aufschrumpfen schafft der Schrumpfschlauch 49 einen feuchtigkeitsdichten Abschluß der Abzweigmuffe 1, so daß der Eintritt von Feuchtigkeit in das Innere der Abzweigmuffe 1 verhindert wird. An dem Ende der Abzweigmuffe 1, an dem sowohl ein Ende des Hauptkabels 11 als auch das Ende des Abzweigkabels 15 aus der Abzweigmuffe 1 herausgeführt werden, ist zwischen den beiden Kabelenden beispielsweise eine Dichtklammer angeordnet. Es ist aber ebenfalls möglich, an dieser Stelle eine sogenannte Zwei-Finger-Aufteilungsschrumpfkappe zu verwenden.

## Patentansprüche

1. Abzweigmuffe (1) für Energiekabel, insbesondere für einadnge kunststoffisolierte Mittel- oder Hochspannungskabel, mit einem Abzweigteil (3), das eine elektrische Verbindung zwischen einem elektrischen Leiter (9) eines Hauptkabels (11) und einem elektrischen Leiter (13) eines Abzweigkabels (15) herstellt, und einem Muffenkörper (25), **dadurch gekennzeichnet,** daß der elektrische Leiter (13) des Abzweigkabels (15) mit einem Steckverbinder (17) versehen und mittels einer Steckverbindung mit dem Abzweigteil (3) verbunden ist.

2. Abzweigmuffe nach Anspruch 1, **dadurch gekennzeichnet,** daß das Hauptkabel (11) durchtrennt, die beiden Enden seines elektrischen Leiters (9) jeweils mit einem Steckverbinder (19, 21) versehen und mittels einer Steckverbindung mit dem Abzweigteil (3) verbunden sind.

3. Abzweigmuffe nach Anspruch 1 oder 2, **dadurch gekennzeichnet,** daß das Abzweigkabel (15) parallel zu dem Hauptkabel (11) aus dem Muffenkörper (25) herausgeführt ist.

4. Abzweigmuffe nach einem der Ansprüche 1 bis 3, **dadurch gekennzeichnet,** daß die Steckverbinder (17, 19, 21) in dem Abzweigteil (3) in ihrer Lage fixiert sind.

5. Abzweigmuffe nach einem der Ansprüche 1 bis 4, **dadurch gekennzeichnet,** daß der Muffenkörper (25) aus einem elastischen Werkstoff ausgebildet ist.

6. Abzweigmuffe nach einem der Ansprüche 1 bis 5, **dadurch gekennzeichnet,** daß der Muffenkörper (25) als vorgefertigtes Aufschiebeteil ausgebildet ist.

7. Abzweigrnuffe nach einem der Ansprüche 1 bis 5, **dadurch gekennzeichnet,** daß der Muffenkörper (25) als Kaltschrumpfteil ausgebildet ist.

8. Abzweigmuffe nach einem der Ansprüche 1 bis 7, **dadurch gekennzeichnet,** daß in dem Muffenkörper (25) elektrisch leitfähige Feldsteuerelemente (27, 33) angeordnet sind.

9. Abzweigmuffe nach einem der Ansprüche 1 bis 8, **dadurch gekennzeichnet,** daß das Abzweigteil (3) von einem elektrisch leitfähigen Feldsteuerelement (27) umschlossen ist.

10. Abzweigmuffe nach einem der Ansprüche 1 bis 9, **dadurch gekennzeichnet,** daß über dem Muffenkörper (25) ein Schrumpfschlauch (49) angeordnet ist.
